# FASCICULE DE BREVET EUROPEEN

(11) **EP 2 646 130 B1**
(45) Date de publication et mention de la délivrance du brevet: **13.09.2017**
(21) Numéro de dépôt: 11801782.1
(22) Date de dépôt: 28.11.2011
(51) Int. Cl.: B01D 29/03, B01D 29/56, C02F 1/00, C02F 103/00, C02F 1/28, C02F 1/42, C02F 103/44

(54) **PROCÉDÉ ET DISPOSITIF DE FILTRATION DES EAUX PLUVIALES ET DES EAUX USÉES D'ORIGINE INDUSTRIELLE**
VERFAHREN UND VORRICHTUNG ZUR FILTRATION VON REGENWASSER UND INDUSTRIELLER ABWÄSSER
METHOD AND APPARATUS FOR THE FILTRATION OF RUN-OFF WATER AND INDUSTRIAL WASTEWATER

(30) Priorité: 29.11.2010 FR 1059840
(43) Date de publication de la demande: 09.10.2013
(73) Titulaire: Saint Dizier Environnement (SDENV), 92100 Boulogne Billancourt (FR)
(72) Inventeur: VIAU, Jean-Yves, F-59830 Cysoing (FR)
(74) Mandataire: Rhein, Alain
(86) Numéro de dépôt international: PCT/FR2011/052798
(87) Numéro de publication internationale: WO 2012/072936

(56) Documents cités:
- EP-A1- 0 830 886
- WO-A2-2008/073818
- DE-A1- 4 409 124
- US-A- 5 820 762
- US-A1- 2003 070 977
- DATABASE WPI Section PQ Thomson Scientific, London, GB; Class Q35, AN 2009-R62244 [82] XP002655105, "WASTE TRAP", -& KR 2009 0108277 A (HAM IN KYU, KANG CHUL KYU, LEE POONG GU, ORACLEWOOD CO LTD [KR]) 15 octobre 2009 (2009-10-15)

## Description

L'invention concerne un procédé et un dispositif de filtration des eaux, et tout particulièrement des eaux pluviales et industrielles.

Le traitement des eaux pluviales et le prétraitement des eaux usées d'origine industrielle, provenant, par exemple, des aires de lavage, est généralement effectué en utilisant des techniques connues, telles que le dégrillage, destiné à intercepter les macro-déchets, la décantation des matières en suspension et des polluants qui peuvent leur être associés, la flottation par piégeage des liquides légers comme les hydrocarbures, etc. Ces techniques mettent en oeuvre notamment des décanteurs lamellaires ou encore des débourbeurs séparateurs de liquides légers.

D'autres techniques sont aussi connues et utilisées pour les eaux industrielles et les eaux à potabiliser, comme la filtration sur cartouches filtrantes, sur charbon actif (adsorption des polluants), l'échange ionique..., mais ces techniques fonctionnent sous pression et sont alimentées par pompage dans la plupart des cas.

La mise en oeuvre de ces techniques dans le domaine des eaux pluviales ou de certaines applications industrielles est souvent exclue, étant donné leur complexité (énergie de pompage, local technique, ...) et leur coût, le plus souvent inconcevable sur les applications visées, où les unités de traitement sont généralement enterrées et directement raccordées au réseau d'assainissement.

On connait encore, par le document de brevet WO 2008/073818, un dispositif permettant la filtration d'eaux de surface qui ne sont pas absorbées par le sol, comportant au moins une couche permettant la filtration et/ou la sorption de ces eaux et des couches en matériaux géotextiles. Cependant, aucune des couches présentes dans ce dispositif ne permet d'assurer une portance à l'ensemble.

La présente invention a pour but de remédier à ces inconvénients. Cette invention, telle qu'elle se caractérise, résout le problème consistant à créer un jeu de filtres compacts et autoportants intégrant une ou plusieurs des fonctions décrites ci-avant, avec lequel, d'une part, il soit possible d'adapter le traitement à la nature des polluants contenus dans l'eau et au degré de pureté recherché et, d'autre part, très facile à mettre en place, à remplacer et à adapter à un éventuel support.

Ainsi, la présente invention concerne dans un premier temps un procédé de filtration des eaux pluviales et industrielles selon la revendication 1.

La présente invention concerne également un dispositif de filtration des eaux pluviales et industrielles selon la revendication 2 pour la mise en oeuvre du procédé selon la revendication 1.

Selon un exemple de réalisation particulièrement avantageux, lesdites poches filtrantes du dispositif comportent des fibres oléophiles, par exemple des fibres en polypropylène, et/ou du charbon actif en grain et/ou du charbon actif activé sous forme de billes et/ou des fibres oléophiles sur lesquelles ont été fixés des grains ou des billes de charbon actif ou activé.

Préférentiellement, les poches filtrantes sont réalisées de façon souple à partir d'un crin en nylon, en leur donnant une forme générale cylindrique, cubique ou parallélépipédique. Les plaques de filtration autoportantes et rigides consistent en des panneaux de fibres tridimensionnelles en polypropylène comportant un taux de vide supérieur à 90%.

La présence de telles plaques de filtration permet notamment de supporter les poches de filtration et de séparer deux couches de poches filtrantes, ces dernières pouvant présenter des capacités de filtration différentes et avantageusement complémentaires. Le présent dispositif peut alors être disposé selon une orientation horizontale ou verticale pour filtrer l'eau qui doit être traitée.

Selon un mode de réalisation particulier, le caisson de filtration est sensiblement rectangulaire et comporte des parois latérales pleines, une paroi d'entrée amont et une paroi de sortie avale, prises dans le sens du flux des eaux à filtrer, lesdites parois d'entrée et de sortie étant grillagées, ledit caisson comportant encore au moins deux parois intercalaires grillagées définissant au moins deux compartiments, chacun des compartiments du caisson comportant une alternance de plaques filtrantes et de poches filtrantes, une poche filtrante étant encadrée de deux plaques filtrantes.

Pour son utilisation en partie supérieure de regards de décantation des eaux pluviales, le caisson est associé à une plaque de fixation comportant, en son milieu, un orifice circulaire disposé dans l'alignement des parois grillagées, de diamètre correspondant environ à celui de la tuyauterie d'évacuation de l'eau filtrée, devant l'entrée de laquelle le caisson est disposé par l'intermédiaire de sa plaque de fixation.

Le caisson est disposé et retenu devant l'entrée de la tuyauterie d'évacuation de l'eau filtrée par engagement des bords opposés de sa plaque de fixation dans des rainures constituées de tronçons de profilés métalliques de section correspondante, solidarisés aux parois latérales du regard. Les parois pleines du caisson sont munies, à leur partie supérieure, de poignées facilitant la mise en place et le retrait.

Les avantages obtenus grâce à cette invention, consistent, pour l'essentiel, en ce que le dispositif dont il s'agit est utilisable en fonctionnement hydraulique gravitaire, avec des pertes de charges maîtrisées, en assurant une filtration progressive et en profondeur permettant de retenir les particules non piégées par décantation ; une décantation poussée en amont restant cependant impérative pour des effluents chargés de matières en suspension, en ce que sa mise en oeuvre s'effectue dans des poches filtrantes facilitant les opérations d'exploitation et de maintenance ; une installation de traitement compacte pouvant être enterrée sans apport d'énergie ; un coût maîtrisé, très inférieur à celui des techniques traditionnelles, nécessitant cependant un fonctionnement sous pression. La présence de plaques rigides, qui permettent de séparer les poches filtrantes et de les supporter ainsi que la combinaison de poches filtrantes contenant des matériaux de traitement différents permet une filtration optimale des eaux industrielles ou pluviales.

D'autres caractéristiques et avantages apparaîtront dans la description qui va suivre des filtres selon l'invention et de leur utilisation sur un décanteur lamellaire, dans un regard de décantation des eaux pluviales, à l'aval des avaloirs, donnés à titre d'exemple non limitatif, au regard des dessins annexés, sur lesquels :
- la figure 1 représente une combinaison de moyens de filtration assurant plusieurs niveaux de filtration, à alimentation frontale,
- la figure 2 représente une combinaison de moyens selon la figure 1, à alimentation à flux ascendant,
- la figure 3 représente une combinaison de moyens selon la figure 1, à alimentation à flux descendant,
- la figure 4 représente un dispositif de mise en oeuvre d'une combinaison de moyens de filtration selon les figures 1 à 3, au sein d'un regard de décantation des eaux pluviales, à l'aval des avaloirs,
- la figure 5 est une représentation schématique du montage de la combinaison de moyens de filtration selon les figures 1 à 3 dans un décanteur lamellaire,
- la figure 6 représente une vue en élévation, en coupe longitudinale et en perspective, d'un décanteur de type lamellaire circulaire, équipé de lames tronconiques superposées.

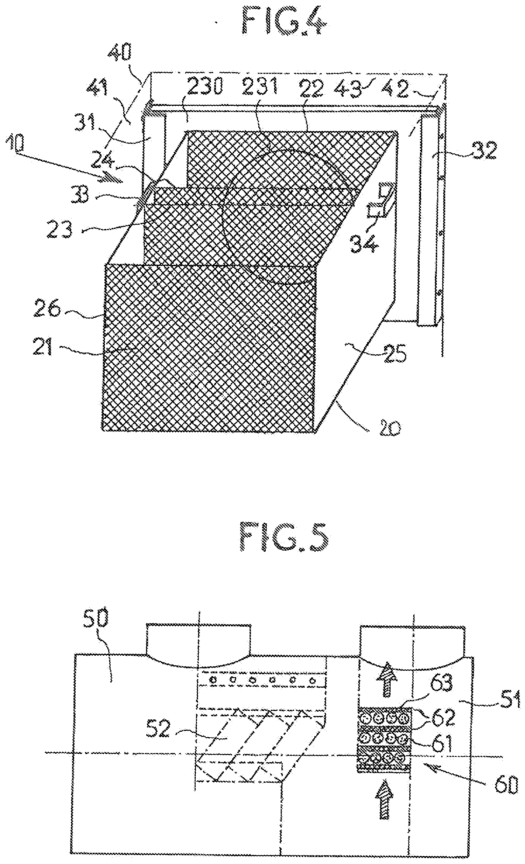

La présente invention concerne dans un premier temps un procédé de filtration des eaux pluviales et industrielles. Ce procédé comporte avantageusement les étapes suivantes :
- on associe, dans un caisson de filtration **20** ou **51** tel que représenté sur les figures 4 et 5, des plaques filtrantes **11**, **62** en matériau poreux, autoportantes et rigides, et des poches filtrantes **12**, **61**, disposées de façon alternée dans le sens du flux de liquide et agencées de façon à ce qu'elles soient successivement traversées par celui-ci, une poche filtrante **12**, **61** étant encadrée par deux plaques filtrantes **11**, **62** autoportantes et rigides,
- on dispose les plaques filtrantes **11**, **62** autoportantes et rigides selon leur seuil de filtration, de plus en plus fin de l'amont vers l'aval,
- on associe des poches filtrantes **12** de contenu différent, offrant des possibilités de filtration complémentaires,
- on filtre lesdites eaux pluviales ou industrielles à travers lesdites plaques filtrantes **11**, **62** et lesdites poches filtrantes **12**, **61.**

Le fait que les poches filtrantes **12**, **61** présentent un contenu différent permet de filtrer de façon particulièrement efficace les eaux industrielles ou pluviales qui sont traitées selon le présent procédé.

La présente invention est également relative à un dispositif de filtration **10**, **60** des eaux pluviales et industrielles pour la mise en oeuvre du procédé selon l'invention. Les dispositifs **10** et **60** sont représentés respectivement sur les figures 4 et 5. Ces derniers comportent, dans un caisson de filtration **20**, **51**, entre une extrémité amont et une extrémité avale dudit caisson, une succession et une alternance de plaques filtrantes respectivement **11** et **62** réalisées en matériau poreux, autoportantes et rigides, et de poches filtrantes **12** et **61.** L'extrémité amont correspond à l'extrémité par laquelle le flux des eaux à filtrer entre dans le dispositif tandis que l'extrémité avale correspond à l'extrémité par laquelle sort ledit flux. Selon une caractéristique particulièrement avantageuse de l'invention, une poche filtrante **12, 61** est entourée par deux plaques filtrantes **11, 62** rigides. Selon un mode de réalisation particulier du dispositif **10** selon l'invention, visible sur la figure 4, les plaques **11** et les poches filtrantes **12** sont disposées dans un caisson rectangulaire **20.** Ce dernier comporte, dans le sens du flux des eaux à filtrer, une paroi d'entrée amont **21**, une paroi de sortie avale **22.** Le caisson **20** comporte encore deux parois latérales **25** et **26** et au moins deux parois intercalaires **23** et **24** entre les parois d'entrée **21** et de sortie **22**, ces parois **23** et **24** définissant au moins deux compartiments, chacun de ces compartiments étant destiné à contenir une succession et une alternance de plaques filtrantes **11** et de poches filtrantes **12**, une poche **12** étant entourée par deux plaques **11.** Ces dernières sont disposées selon leur seuil de filtration, de plus en plus fin de depuis l'extrémité amont vers l'extrémité avale. Les poches filtrantes **12** peuvent contenir des matériaux assurant les fonctions cumulées ou non d'absorption, d'adsorption, d'échange ionique, de désinfection, etc., tels que des fibres oléophiles et du charbon actif en grains.

Préférentiellement, lesdites parois d'entrée et de sortie **21**, **22** sont grillagées, ainsi que les parois intercalaires **23** et **24**, permettant ainsi le passage du flux des eaux à traiter tandis que les parois latérales **25** et **26** sont pleines.

Les plaques de filtration **11** peuvent avantageusement être fixées par exemple au caisson **20** par l'intermédiaire de moyens adaptés. Lesdites plaques de filtration **11** permettent alors avantageusement de séparer deux poches de filtration **12** tout en les supportant et en les maintenant à l'intérieur du dispositif **10.**

La présence des deux compartiments au sein du caisson **20** permet avantageusement de placer, dans l'un des compartiments, une ou plusieurs poches de filtration **12** présentant certaines possibilités de filtration et, dans le second compartiment, un autre type de poches **12** offrant une filtration de l'eau complémentaire. Ainsi, la filtration est particulièrement optimale.

De façon avantageuse, le dispositif **10** comporte encore une plaque de fixation **230** qui peut être solidarisée à la paroi de sortie **22** du caisson **20.** La plaque de fixation **230** comporte, avantageusement en son centre, un orifice de grand diamètre **231.** Ladite plaque **230** est préférentiellement conçue pour coulisser verticalement dans des profilés métalliques **31** et **32** fixés respectivement contre les parois **41** et **42** d'un regard **40,** jusqu'à superposition de l'ouverture du conduit d'évacuation du regard **40** par l'orifice **231** que comporte la plaque de fixation **230** solidarisée au caisson **20.** La mise en place et le retrait du caisson **20** du dispositif **10** sont facilités par des poignées **33**, **34**, fixées dans le haut et vers l'arrière des parois latérales **25** et **26** du caisson **20.**

Le caisson **20** du dispositif **10** selon l'invention est donc amovible et destiné à recevoir la combinaison de moyens de filtration constituée de plaques poreuses **11** et de poches filtrantes **12** (non représentées sur la figure 4). Il est conçu pour se fixer contre la paroi avale **43** du regard **40**, avec mise en concordance de l'orifice circulaire **231** ménagé dans le milieu de la plaque de fixation **230** avec l'ouverture du conduit d'évacuation du regard **40** ; cette mise en place étant obtenue par introduction de l'extrémité inférieure des côtés verticaux de la plaque **230** dans les glissières constituées de profilés métalliques **31**, **32**, fixés contre les parois latérales **41** et **42** du regard **40**, puis coulissement vers le bas jusqu'à mise en appui contre une butée constituée d'un repli vers l'intérieur de l'extrémité inférieure de l'âme des profilés **31**, **32**, ceci, en utilisant les poignées **33** et **34** situées dans le haut des parois latérales **25** et **26** du caisson **20.** Le retrait pour maintenance ou changement des poches filtrantes s'obtient en effectuant les opérations dans l'ordre inverse.

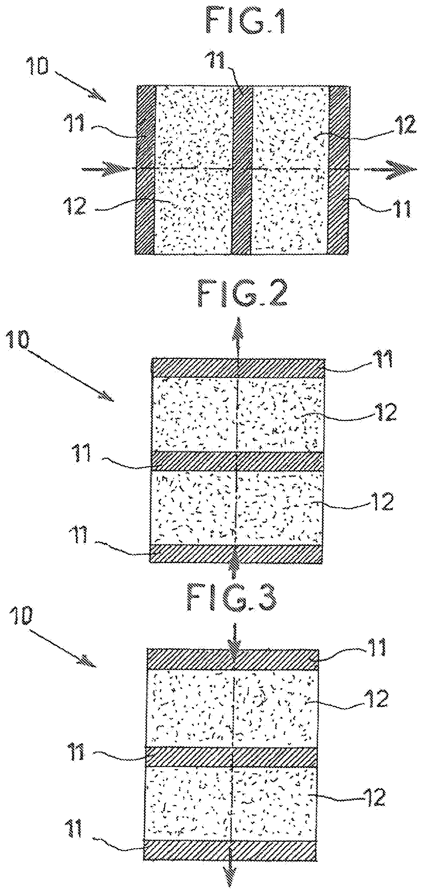

En examinant maintenant plus en détail les figures 1 à 3, concernant la combinaison de moyens filtrants que comporte le dispositif de filtration **10**, on remarque qu'elle est constituée de plaques filtrantes **11.** Ces dernières sont poreuses, autoportantes et rigides, et inertes vis-à-vis de l'effluent à traiter et sont fabriquer à partir de fil de polypropylène. Les plaques filtrantes **11** permettent de séparer des poches filtrantes souples **12**, une poche **12** étant encadrée par deux plaques **11.**

Lesdites poches filtrantes **12** sont avantageusement réalisées en crin de nylon, et peuvent être de forme cylindrique, cubique ou parallélépipédique, cousues à leurs extrémités ou fermées par un rabat extérieur, après remplissage avec un matériau absorbant ou adsorbant, tel que du charbon actif en grains, l'échange ionique étant basé sur l'imprégnation de sites fonctionnels sur des fibres.

Les poches filtrantes souples **12** peuvent également être remplies avec des fibres oléophiles, ces dernières pouvant avantageusement consister en des fibres de polypropylène. Lesdites fibres oléophiles présentent avantageusement une affinité particulière pour les corps gras. Ainsi, l'eau traitée passant par la poche filtrante **12** comportant des fibres oléophiles, notamment en polypropylène, sera débarrassée des corps gras qu'elle est susceptible de contenir.

D'autres types de matériau peuvent être utilisés pour remplir les poches filtrantes **12** et notamment du charbon actif activé sous forme de billes ou encore des fibres oléophiles sur lesquelles ont été fixées des grains de charbon actif ou des billes de charbon actif activé.

Selon une caractéristique particulièrement avantageuse, le dispositif **10** contient une pluralité de poches filtrantes **12**, comme cela est visible sur les figures 1 à 3. Ainsi, une des poches **12** du dispositif peut contenir un des matériaux cités précédemment tandis qu'une seconde poche **12** comprendra un matériau différent, également avantageusement choisi parmi les matériaux précités ; cela permet de conférer au présent dispositif **10** selon l'invention des capacités de filtration complémentaires particulièrement intéressantes pour la filtration des eaux industrielles ou pluviales.

Les plaques filtrantes **11** autoportantes et rigides sont fabriquées à partir de panneaux de fibres tridimensionnelles. Les panneaux de fibres, et de ce fait les plaques filtrantes **11**, présente un taux de vide supérieur à 90%. Lesdites plaques **11** permettent ainsi un passage aisé des eaux à filtrer entre deux poches **12** tout en supportant ces dernières.

En se rapportant maintenant à la figure 5, on remarque que le dispositif de filtration **60** selon l'invention peut également être adapté à un décanteur lamellaire horizontal **50** pour y être disposé en aval des modules de décantation lamellaires **52**. Dans ce cas là, le dispositif de filtration **60** comporte un caisson **51** dans lequel les plaques de filtration **62** et les poches filtrantes **61** sont alternées. Une telle possibilité est illustrée sur **5** annexée.

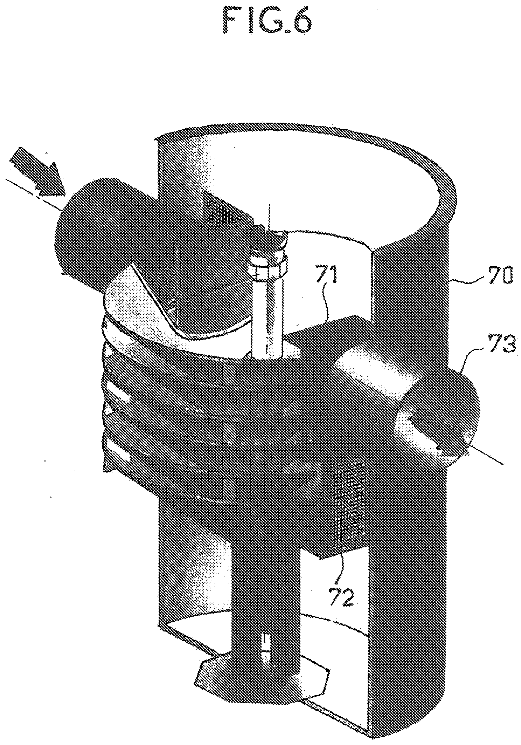

En examinant maintenant successivement les figures 5 et 6, représentant respectivement un décanteur lamellaire d'axe horizontal **50** et un décanteur lamellaire d'axe vertical **70**, équipés d'un dispositif de filtration selon l'invention, on remarque, sur la figure 5, que ce dispositif **60** est constitué de plaques de filtration **61** et de poches filtrantes **62**, disposées dans le caisson de filtration **51** dudit décanteur **50**, en aval des modules de décantation lamellaires **52** ; ledit dispositif **60** étant constitué préférentiellement de trois lits de poches filtrantes **61**, de caractéristiques appropriées, disposés horizontalement et séparés verticalement, supportés par des plaques de filtration **62** autoportantes et rigides, le tout étant surmonté d'un caillebotis **63**, reposant sur une plaque filtrante **62**, ledit caillebotis **63** étant aisément escamotable pour accéder aux composants du dispositif **60**, en vue de leur remplacement ou de leur substitution.

La figure 6 représente un décanteur lamellaire d'axe vertical **70**, correspondant à celui décrit et revendiqué dans le brevet français 2 689 781 qui n'était destiné qu'à la clarification de liquides chargés de particules, susceptible d'effectuer simultanément le dégrillage, la clarification et la filtration à un degré prédéterminé, en montant, en amont de son conduit de sortie **73**, un caisson de filtration **71** amovible, analogue à celui représenté à la figure 4, mais disposé pour recevoir, par la grille **72**, un flux ascendant de liquide, tel que représenté à la figure 2.

Les applications envisagées pour cette invention sont les domaines des eaux pluviales et des eaux industrielles (aires de lavage par exemple) au sein d'ouvrages compacts, à l'aval des étapes de dégrillage, de clarification et de déshuilage. Elle peut être ainsi mise en oeuvre dans des ouvrages préfabriqués, comme les décanteurs lamellaires, les débourbeurs séparateurs de liquides légers, mais également en partie supérieure de regards de décantation des eaux pluviales, au sein d'un caisson.

## Revendications

1. Procédé de filtration des eaux pluviales et industrielles, mettant en oeuvre des matériaux adaptés au niveau de traitement recherché, intervenant par absorption, adsorption, échange ionique ou/et désinfection, ledit procédé comportant les étapes suivantes :
- on associe, dans un caisson de filtration (**20, 51**), un jeu de filtres compacts et autoportant comprenant des plaques filtrantes **(11, 62)** en matériau poreux, autoportantes et rigides, et des poches filtrantes **(12, 61)**, disposées de façon alternée dans le sens du flux de liquide et agencées de façon à ce qu'elles soient successivement traversées par celui-ci, une poche filtrante **(12, 61)** étant encadrée par deux plaques filtrantes **(11, 62)**, autoportantes et rigides,
- on dispose les plaques filtrantes **(11, 62)** autoportantes et rigides selon leur seuil de filtration, de plus en plus fin de l'amont vers l'aval, lesdites plaques filtrantes **(11, 62)** autoportantes et rigides consistant en des panneaux de fibres tridimensionnelles en polypropylène comportant un taux de vide supérieur à 90%,
- on associe des poches filtrantes **(12, 61)** de contenu différent, offrant des possibilités de filtration complémentaires,
- on filtre les eaux pluviales ou industrielles à travers lesdites plaques filtrantes **(11, 62)** et lesdites poches filtrantes **(12, 61).**

2. Dispositif de filtration **(10, 60)** des eaux pluviales et industrielles pour la mise en oeuvre du procédé selon la revendication 1, ledit dispositif **(10, 60)** étant **caractérisé en ce qu'**il comporte, entre une extrémité amont et une extrémité avale d'un caisson de filtration **(20, 51)**, prises dans le sens du flux des eaux à filtrer, un jeu de filtres compacts et autoportant comprenant une succession et une alternance de plaques filtrantes **(11, 62)**, autoportantes et rigides, et de poches filtrantes **(12, 61)**, une poche filtrante **(12, 61)** étant encadrée de deux plaques filtrantes **(11, 62)**, lesdites plaques filtrantes **(11, 62)** étant réalisées en matérieau poreux et consistant en des panneaux de fibres tridimensionnelles en polypropylène comportant un taux de vide supérieur à 90%, et étant disposées selon leur seuil de filtration, de plus en plus fin de l'amont vers l'aval, et lesdites poches filtrantes **(12, 61)** présentant un contenu différent offrant des possibilités de filtration complémentaires.

3. Dispositif de filtration **(10, 60)** selon la revendication 2 **caractérisé en ce que** lesdites poches filtrantes **(12, 61)** du dispositif **(10, 60)** comportent des fibres oléophiles, par exemple des fibres en polypropylène, et/ou du charbon actif en grain et/ou du charbon actif activé sous forme de billes et/ou des fibres oléophiles sur lesquelles ont été fixés des grains ou des billes de charbon actif ou activé.

4. Dispositif de filtration **(10, 60)** selon la revendication 3 **caractérisé en ce que** les poches filtrantes **(12, 61)** sont réalisées de façon souple à partir d'un crin en nylon, en leur donnant une forme générale cylindrique, cubique ou parallélépipédique.

5. Dispositif de filtration **(10)** selon l'une quelconque des revendications 2 à 4 **caractérisé en ce que** le caisson de filtration **(20)** est sensiblement rectangulaire et comporte des parois latérales **(25, 26)** pleines, une paroi d'entrée amont **(21)** et une paroi de sortie avale **(22)**, prises dans le sens du flux des eaux à filtrer, lesdites parois d'entrée **(21)** et de sortie **(22)** étant grillagées, ledit caisson **(20)** comportant encore au moins deux parois intercalaires **(23, 24)** grillagées définissant au moins deux compartiments, chacun des compartiments du caisson **(20)** comportant une alternance de plaques filtrantes **(11)** et de poches filtrantes **(12)**, une poche filtrante **(12)** étant encadrée de deux plaques filtrantes **(11).**

6. Dispositif de filtration **(10)** selon la revendication 5, **caractérisé en ce que** le caisson **(20)** est associé à une plaque de fixation **(230)** comportant, en son milieu, un orifice **(231)** circulaire disposé dans l'alignement des parois grillagées d'entrée et de sortie **(21, 22)**, de diamètre correspondant environ à celui du diamètre intérieur de la tuyauterie d'évacuation du liquide filtré, devant l'entrée de laquelle le caisson **(20)** est retenu par l'intermédiaire de sa plaque de fixation **(230).**

7. Dispositif de filtration **(10)** selon la revendication 6, **caractérisé en ce que** le caisson **(20)** est retenu par engagement des bords opposés de sa plaque de fixation **(230)** dans des rainures constituées de tronçons de profilés métalliques **(31, 32)** de section correspondante, solidarisés aux parois latérales **(41, 42)** d'un regard **(40).**

8. Dispositif de filtration **(10)** selon la revendication 7, **caractérisé en ce que** les parois latérales pleines **(25, 26)** du caisson **(20)** sont munies, à leur partie supérieure, de poignées **(33, 34)** facilitant sa mise en oeuvre et son retrait.

## Patentansprüche

1. Verfahren zum Filtrieren von Regen- und Industriewasser, mit Verwendung von für den gewünschten Verarbeitungsgrad geeigneten Materialien, die durch Absorption, Adsorption, Ionenaustausch und/oder Desinfektion wirksam sind, wobei das besagte Verfahren folgende Schritte umfasst:
- in einem Filterkasten (20, 51) werden ein Satz von kompakten und selbsttragenden Filtern einander zugeordnet, die selbsttragende und starre Filterplatten (11, 62) aus porösem Material und Filtertaschen (12, 61) umfassen, die abwechselnd in der Richtung des Flüssigkeitsflusses angeordnet und derartig angeordnet sind, dass sie aufeinanderfolgend von dem letzteren durchquert werden, wobei eine Filtertasche (12, 61) von zwei selbsttragenden und starren Filterplatten (11, 62) umgeben ist,
- die selbsttragenden und starren Filterplatten (11, 62) werden nach ihrer von stromaufwärts nach stromabwärts zunehmend feineren Filtrationsschwelle angeordnet, wobei die besagten selbsttragenden und starren Filterplatten (11, 62) aus dreidimensionalen Faserpaneelen aus Polypropylen bestehen, die einen Leeranteil von mehr als 90% umfassen,
- die Filtertaschen (12, 61) unterschiedlicher Inhalte, die ergänzende Filtrationsmöglichkeiten bieten, werden einander zugeordnet,
- das Regen- oder Industriewasser wird durch die besagten Filterplatten (11, 62) und die besagten Filtertaschen (12, 61) gefiltert.

2. Vorrichtung zum Filtrieren (10, 60) von Regen- und Industriewasser zur Durchführung des Verfahrens nach Anspruch 1, wobei die besagte Vorrichtung (10, 60) **dadurch gekennzeichnet ist, dass** sie zwischen einem stromaufwärtigen Ende und einem stromabwärtsen Ende eines Filterkastens (20, 51), wenn in der Richtung des Stroms des zu filtrierenden Wassers gesehen, einen Satz von kompakten und selbsttragenden Filtern umfasst, die eine Folge und eine Abwechslung von selbsttragenden und starren Filterplatten (11, 62) und Filtertaschen (12, 61) umfassen, wobei eine Filtertasche (12, 61) von zwei Filterplatten (11, 62) umgeben ist, wobei die besagten Filterplatten (11, 62) aus porösem Material gefertigt sind und aus dreidimensionalen Faserpaneelen aus Polypropylen bestehen, die einen Leeranteil von mehr als 90% umfassen, und nach ihrer von stromaufwärts nach stromabwärts zunehmend feineren Filtrationsschwelle angeordnet sind, und wobei die besagten Filtertaschen (12, 61) einen unterschiedlichen Inhalt aufweisen, wodurch sie ergänzende Filtrationsmöglichkeiten bieten.

3. Vorrichtung zum Filtrieren (10, 60) nach Anspruch 2, **dadurch gekennzeichnet, dass** die besagten Filtertaschen (12, 61) der Vorrichtung (10, 60) oleophile Fasern, beispielsweise Polypropylenfasern, und/oder körnige Aktivkohle und/oder kugelförmige aktivierte Aktivkohle und/oder oleophile Fasern, an denen körnige oder kugelförmige Aktivkohle oder aktivierte Kohle fixiert ist, umfassen.

4. Vorrichtung zum Filtrieren (10, 60) nach Anspruch 3, **dadurch gekennzeichnet, dass** die Filtertaschen (12, 61) auf flexibler Art und Weise ab Haaren aus Nylon gefertigt werden, wobei ihnen eine allgemeine zylindrische, kubische oder Quaderform verleiht wird.

5. Vorrichtung zum Filtrieren (10) nach einem der Ansprüche 2 bis 4, **dadurch gekennzeichnet, dass** der Filterkasten (20) im wesentlichen rechteckig ist und feste Seitenwände (25, 26), eine stromaufwärtige Einlasswand (21) und eine stromabwärtige Auslasswand (22), wenn in der Richtung des Stroms des zu filtrierenden Wassers gesehen, umfasst, wobei die besagte Einlasswand (21) und die besagte Auslasswand (22) gitterförmig sind, wobei der besagte Kasten (20) auch mindestens zwei gitterförmige Zwischenwände (23, 24) umfasst, die mindestens zwei Kammern definieren, wobei jede der Kammern des Kastens (20) eine Abwechslung von Filterplatten (11) und Filtertaschen (12) umfasst, wobei eine Filtertasche (12) von zwei Filterplatten (11) umgeben ist.

6. Vorrichtung zum Filtrieren (10) nach Anspruch 5, **dadurch gekennzeichnet, dass** der Kasten (20) einer Befestigungsplatte (230) zugeordnet ist, die in ihrer Mitte ein kreisförmiges Loch (231) umfasst, das so angeordnet ist, dass es mit den Einlass- und Auslasswände (21, 22) fluchtet, dessen Durchmesser etwa demjenigen des Innendurchmessers des Auslassrohres der filtrierten Flüssigkeit entspricht, vor dessen Eingang der Kasten (20) mittels seiner Befestigungsplatte (230) festgehalten wird.

7. Vorrichtung zum Filtrieren (10) nach Anspruch 6, **dadurch gekennzeichnet, dass** der Kasten (20) durch Eingriff der gegenüberliegenden Ränder der Befestigungsplatte (230) in Nuten festgehalten wird, die aus Profilabschnitten aus Metall (31, 32) entsprechenden Querschnitts bestehen, die fest mit den Seitenwänden (41, 42) einer Schauhlappe (40) verbunden sind.

8. Vorrichtung zum Filtrieren (10) nach Anspruch 7, **dadurch gekennzeichnet, dass** die festen Seitenwände (25, 26) des Kastens (20) an ihrem Oberteil mit Griffen (33, 34) versehen sind, die ihrer Umsetzung und ihre Herausnahme erleichtern.

## Claims

1. Method for filtering rain and industrial water, implementing materials adapted to the desired level of treatment, intervening by absorption, adsorption, ion exchange or/and disinfection, said method including the following steps:
- in a filter box (20, 51) are associated a set of compact and self-supporting filters comprising self-supporting and rigid filter plates (11, 62) made of porous material, and filter bags (12, 61) alternately arranged in the direction of the flow of liquid and arranged so that the latter successively passes therethrough, a filter bag (12, 61) being surrounded by two self-supporting and rigid filter plates (11, 62),
- the self-supporting and rigid filter plates (11, 62) are arranged according to their filtering threshold, which is increasingly finer from upstream to downstream, said self-supporting and rigid filter plates (11, 62) consisting of three-dimensional fiber panels made of polypropylene and including a void ratio higher than 90%,
- filtering bags (12, 61) with different content volumes are associated, which provide complementary filtering possibilities,
- the rain or industrial water is filtered through said filter plates (11, 62) and said filter bags (12, 61).

2. Device for filtering (10, 60) rain and industrial water for implementing the method according to claim 1, said device (10, 60) being **characterized in that** it includes, between an upstream end and a downstream end of a filter box (20, 51), considered in the direction of the flow of the water to be filtered, a set of compact and self-supporting filters comprising a succession and alternation of self-supporting and rigid filter plates (11, 62) and filter bags (12, 61), a filter bag (12, 61) being surrounded by two filter plates (11, 62), said filter plates (11, 62) being made of porous material and consisting of three-dimensional fiber panels made of polypropylene and including a void ratio higher than 90%, and being arranged according to their filtering threshold, which is increasingly finer from upstream to downstream, and said filter bags (12, 61) having a different content volume providing complementary filtering possibilities.

3. Device for filtering (10, 60) according to claim 2, wherein said filter bags (12, 61) of the device (10, 60) include oleophilic fibers, for example polypropylene fibers, and/or granulated active carbon and/or active carbon in the form of beads and/or oleophilic fibers to which active or activated carbon grains or beads have been attached.

4. Device for filtering (10, 60) according to claim 3, wherein the filter bags (12, 61) are made flexibly from a nylon bristle, by providing them with a generally cylindrical, cubic or parallelepipedal shape.

5. Device for filtering (10) according to any one of claims 2 to 4, wherein the filtering box (20) is substantially rectangular and includes solid side walls (25, 26), an upstream inlet wall (21) and a downstream outlet wall (22), considered in the direction of the flow of water to be filtered, said inlet (21) and outlet (22) walls being made as a grid, said box (20) also including at least two interposed mesh walls (23, 24), which define at least two compartments, each of the compartments of the box (20) including an alternation of filter plates (11) and filter bags (12), a filtering bag (12) being surrounded by two filter plates (11).

6. Device for filtering (10) according to claim 5, wherein the box (20) is associated with a fastening plate (230) including in its middle a circular orifice (231) arranged in line with the inlet and outlet mesh walls (21, 22), having a diameter corresponding to approximately the inner diameter of the filtered liquid discharge pipe, in front of the inlet of which the box (20) is retained by means of its fastening plate (230).

7. Device for filtering (10) according to claim 6, wherein the box (20) is retained by insertion of the opposite edges of its fastening plate (230) into grooves formed of segments of metal profiles (31, 32) having a corresponding cross-section, integral with the side walls (41, 42) of an inspection chamber (40).

8. Device for filtering (10) according to claim 7, wherein the solid side walls (25, 26) of the box (20) are provided at their upper portion with handles (33, 34) facilitating its implementation and its removal.
